**Europäisches Patentamt**

**European Patent Office**

**Office européen des brevets**

(19)

(11) Veröffentlichungsnummer : **0 401 269 B1**

(12) # EUROPÄISCHE PATENTSCHRIFT

(45) Veröffentlichungstag der Patentschrift :
**05.08.92 Patentblatt 92/32**

(51) Int. Cl.$^5$ : **D02H 13/08,** B65H 63/00,
G01B 11/06, D06B 23/06

(21) Anmeldenummer : **89902922.7**

(22) Anmeldetag : **20.02.89**

(86) Internationale Anmeldenummer :
**PCT/DE89/00097**

(87) Internationale Veröffentlichungsnummer :
**WO 89/07672 24.08.89 Gazette 89/20**

(54) **VORRICHTUNG ZUM OPTISCHEN ABTASTEN EINER OBJEKTEBENE UNTER ERSCHWERTEN ATMOSPHÄRISCHEN BEDINGUNGEN ZWECKS ERKENNUNG SICH ÄNDERNDER ÜBERHÖHUNGEN AUF DIESER EBENE.**

(30) Priorität : **18.02.88 DE 3805068**

(43) Veröffentlichungstag der Anmeldung :
**12.12.90 Patentblatt 90/50**

(45) Bekanntmachung des Hinweises auf die
Patenterteilung :
**05.08.92 Patentblatt 92/32**

(84) Benannte Vertragsstaaten :
**AT BE CH DE FR GB IT LI LU NL SE**

(56) Entgegenhaltungen :
**EP-A- 0 072 935**

(56) Entgegenhaltungen :
**DE-A- 1 535 166**
**FR-A- 2 015 389**
**GB-A- 2 167 179**
**US-A- 3 041 461**
**US-A- 3 730 633**

(73) Patentinhaber : **Lauffenmühle GmbH
W-7890 Waldshut-Tiengen 2 (DE)**

(72) Erfinder : **BIRKLE, Gebhard
Inselgasse 16
W-7750 Konstanz (DE)**

(74) Vertreter : **Mierswa, Klaus, Dipl.-Ing.
Friedrichstrasse 171
W-6800 Mannheim 24 (DE)**

EP 0 401 269 B1

Jouve, 18, rue Saint-Denis, 75001 PARIS

EP 0 401 269 B1

## Beschreibung

Technisches Gebiet:

Die Erfindung betrifft eine Vorrichtung zum Überwachen der Dicke einer durch kalandrierende Walzen oder Walzengerüste in Schlicht- oder Farbanlagen oder derartigen Behandlungsstrecken geförderten Materialbahn gemäß dem Oberbegriff des Anspruchs 1.

Stand der Technik:

In Schlichtanlagen der Textilindustrie werden kalandrierende Walzen eingesetzt, in denen breite, eng aneinandergereihte, parallele Fadenlagen durch ein Schlichtebad geführt werden. Vor dem Übergang der Fadenlage in die temperierte Trocknungsstrecke durchläuft die Fadenlage einen Quetschwalzensatz, durch den überflüssige Schlichte von den Fäden abgedrückt und im Bad zurückgehalten werden.

Im Betrieb einer Schlichtanlage ist Fadenriß im Quetschwalzensatz die dominierende Ursache für Betriebsstörungen der Anlage. Der gerissene Faden wickelt sich auf die Unterwalze, die gewöhnlich mit einem gummielastischen Belag versehen ist, als Fadenwulst. auf. Die Überwachung ist jedoch sehr erschwert, weil die Sicht zur Walze durch die dichte Fadenlage über die gesamte Walzenbreite verdeckt ist. Zusätzlich kommt bei Schlichtewalzen hinzu, daß die Sicht aufgrund intensiver Dampfentwicklung, insbesondere an der Walzenoberfläche, verdeckt ist. Das Schadenrisiko ist deshalb hoch, weil zwischen Fadenriß und Zerstörung der Walzen aufgrund der hohen Durchlaufgeschwindigkeit der Fadenlage in der Regel nur ein kurzes Zeitintervall liegt. Des weiteren ist die Zugänglichkeit zur unteren, zu überprüfenden Walze erschwert, weil diese unmittelbar über dem Badspiegel angeordnet und durch Schlichteauftrag an den Walzenrändern verschmutzt ist.

Durch die DE-A1-36 23 678 ist es bekannt, die Walzenoberfläche zum Schutz gegen Zerstörung beim Fadenriß mittels eines länglichen pneumatischen, den aufgewickelten Fadenwulst tangierenden Druckfühlers, der mittels Volumenverdrängung das Störereignis signalisieren soll, abzutasten, was ungenügend ist. Die stärkehaltige Schlichtmasse trocknet zu einem steifen Belag ein, soweit diese nicht ständig dem Schlichtebad zurückgeführt wird. Derartige Druckleisten müssen zudem den unkontrollierbaren temperaturbedingten Gasveränderungen im Abtastraum Rechnung tragen. Außerdem besteht für einen walzentangierenden Druckschlauch durch Reibung zwischen dem sich aufbauenden Fadenwulst eine Zerstörungsgefahr durch das Überwachungskriterium selbst.

Durch die EP 0072935 ist eine optische Überwachungseinrichtung für kalandrierende Walzen in der Textilindustrie bekanntgeworden, bestehend aus einem Lichtstrahl, der längs der Walzenoberfläche und parallel der Walzenachse entlangstreicht, wobei der Walzenquerschnitt den Querschnitt des Lichtstrahls gemäß einem vorgegebenen Prozentsatz teilweise abdeckt. Der Lichtstrahl fällt auf einen Lichtsensor, der ein Ausgangssignal liefert, welches proportional dem Lichtstrom ist.

Durch die DE 1535166 ist ein photoelektrischer Flusenwächter mit einem Lichtsender zur Erzeugung eines parallel zu einer Fadenschar und senkrecht zu deren Bewegungseinrichtung verlaufenden Lichtbündels sowie mit einer photoelektrischen Empfangsanordnung bekanntgeworden, die zwei photoelektrische, in Laufrichtung der Fadenschar gesehen hintereinander und jeweils in einem Eingang eines Differenzverstärkers angeordnete Empfänger aufweist. Die Signale werden somit zeitlich versetzt in der Empfangsanordnung erzeugt.

Derartige Überwachungseinrichtungen sind für den Einsatz für kalandrierende Walzen einer Schlichtanlage ungeeignet, da durch atmosphärische Absorption des Lichtes und somit des Lichtstromes sehr erschwerende Umgebungsbedingungen herrschen, die zu einer Verfälschung des Ausgangssignals eines Sensors führen. Ebenso sind derartige Überwachungseinrichtungen schwer zu justieren und erfordern eine häufige Nachjustage.

Durch die US-A-3730633 ist ein photometrisches System zum Überwachen von auf Transportbändern transportierten Objekten bekanntgeworden, bei dem eine Lichtquelle parallel zur Objektebene Licht aussendet und diese wenigstens tangiert oder von derselben im Querschnitt etwas abgeschattet wird und das Licht auf einen opto-elektrischen Sensor als Lichtempfangs- und Auswerteeinrichtung fällt. Die Lichtquelle erzeugt einen Lichtstrahl mit einem kreisrunden Querschnitt und der Sensor ist zweigeteilt, wobei dessen einer Bereich der Oberfläche des Objektes in Richtung der Normalen näher und dessen anderer Bereich der Oberfläche in Richtung der Normalen entfernter angeordnet ist und der oberflächennähere Bereich als Tastbereich, der oberflächenfernere Bereich als Referenzbereich des Sensors dienen und beide Bereiche die jeweils auf ihnen entfallenden Lichtintensitäten des Lichtstrahls messen.

2

EP 0 401 269 B1

Technische Aufgabe:

Der Erfindung liegt die Aufgabe zugrunde, eine Vorrichtung der genannten Gattung zu schaffen, mit der über Walzen in Schlichte- oder Farbbädern laufende Materialbahnen unter erschwerten atmosphärischen Bedingungen in tangierender Weise abgetastet werden können, um eine sich ändernde Überhöhung der Materialbahn auf der Walze festzustellen, ohne daß sich laufend ändernde atmosphärische Bedingungen, wie Dampf, zu einer Verfälschung der Abtastung führen und um die Walzen vor Schaden zu bewahren.

Darstellung der Erfindung:

Die Lösung der Aufgabe besteht erfindungsgemäße in den Merkmalen des Anspruchs 1. Weitere Ausgestaltungen der Erfindung sind in den Unteransprüchen gekennzeichnet.

Die erfindungsgemäße Vorrichtung besitzt den Vorteil, daß mit dieser sich ändernde Überhöhungen auf der Oberfläche einer Walze erkannt werden können, um daraufhin bestimmte Maßnahmen einzuleiten. Insbesondere können mit der Vorrichtung das Anwachsen eines Fadenwulstes, das Entstehen von Quetschfalten oder sonstigen Anomalien in der Dickenschwankung von Materialbahnen in kalandrierenden Walzen und Walzengerüsten unter sehr erschwerten atmosphärischen Bedingungen sicher erkannt werden. Dadurch ist es möglich, bei der Feststellung derartiger Überhöhungen oder Dickenschwankungen in den Herstellungsprozeß einzugreifen, um zum Beispiel einen wachsenden Fadenwulst oder eine entstandene Quetschfalte zu entfernen und so die Walzen vor Schaden zu bewahren.

Zur Aufteilung des Sensors in den Tast- und den Referenzbereich ist derselbe bevorzugt ein CCD-Matrix-Sensor, dessen optisch aktive Fläche in den Tast- und den Referenzbereich aufgeteilt ist, wobei die Aufteilung bei der Justage der Vorrichtung vorzugsweise softwaremäßig erfolgt. Dadurch ist eine sehr vereinfachte Justage möglich, weil der Tast- und der Referenzbereich auf der optisch aktiven Fläche des CCD-Matrix-Sensors erst nach der mechanischen Justage definiert werden. Insbesondere diese nachträgliche Maskierung des Sensors gestattet die Berücksichtigung erschwerter Montagebedingungen.

Zur Aufteilung des Sensors in den Tast- und den Referenzbereich kann derselbe vorteilhaft auch eine Zwei-Quadrantendiode sein, wobei die dem Tastbereich zugeordnete Diode der Oberfläche des Objektes in Richtung der Normalen näher und die dem Referenzbereich zugeordnete Diode der Oberfläche des Objektes in Richtung der Normalen ferner angeordnet sind.

In vorteilhafter Weise regelt das jeweilige Ausgangssignal des Referenzbereichs des Sensors die Intensität der Lichtquelle auf einen konstanten Wert zum Ausgleich optischer Veränderungen innerhalb des Abtastraumes. Treten im Sensor betreffend den Tastbereich Änderungen auf, so signalisieren diese eine sich ändernde Abschattung des Teils des Lichtstrahls (Tast-Teilstrahl), der dem Tastbereich zugeordnet ist, die nicht von sich ändernden Umgebungsbedingungen innerhalb des Abtastraumes herrühren, sondern durch sich ändernde Anwachsungen auf der abzutastenden Oberfläche der Walze entstehen.

Dadurch ist von Vorteil, daß je nach Dampfaufkommen oder sonstigen Veränderungen der Atmosphäre innerhalb des Abtastraumes der Referenzbereich des Sensors bzw. der Teil der auftreffenden Lichtstrahls (Referenz-Teilstrahl), der als Referenz verwendet wird, dem Empfindlichkeitsbereich des Sensors prüfneutral angepaßt werden kann. Deshalb haben dampf- und temperaturbedingte optische Veränderungen des Abtastraumes, wie Änderungen der Lichtdurchlässigkeit und der Lichtbrechung, oder andere prüfneutrale Störungen, wie z.B. einzelne Schlichtetropfen auf der Walzenoberfläche, keinen Einfluß auf die Erkennung. Dabei werden prüfneutrale Ereignisse, z.B. eine Unrund der Walzenoberfläche, als Störmeldung zeitkritisch unterdrückt.

Beim Aufbau eines Fadenwulstes auf eine Walze wird der Lichtstrahl von den temperatur- und dampfbedingten optischen Störungen moduliert, was gleichermaßen sich ändernde Ausgangssignale des Tastbereichs des Sensors wie des Referenzbereichs zur Folge hat, da zur Erklärung sowohl der Tast-Teilstrahl als auch der Referenz-Teilstrahl des Lichtstrahls gleichermaßen moduliert werden. Der Sensor liefert aufgrund seiner Aufteilung als Tastbereich für den Tast-Teilstrahl und als Referenzbereich für den Referenz-Teilstrahl elektrische Ausgangssignale, mit denen einerseits das System permanent auf das erforderliche Intensitäts- und Empfindlichkeitsniveau eingestellt und andererseits durch logische Verknüpfungen das prüfrelevante Ereignis- das Anwachsen einer Überhöhung auf der Objektoberfläche - erkannt werden.

In vorteilhafter Weise kann die Vorrichtung die bislang aufwendige und unsichere Praxis der visuellen Überwachung durch eine Person ersetzen. Schon ein geringer Fadenauftrag auf der Kalanderwalze wird erkannt und signalisiert, beispielsweise akustisch oder mittels Leuchtanzeige.

In weiterer erfindungsgemäßer Ausgestaltung können die Lichtquellen und die Lichtempfangseinrichtung druckluftbeaufschlagt sein, um beim Vorhandensein von lichtabsorbierenden oder lichtstreuenden Bestandteilen innerhalb des Abtastraumes diese Bestandteile aus dem Weg der Lichtstrahlen zu blasen.

3

Bei der Überwachung von Schlichtewalzen wird auch die optische Abtastachse während eines längeren, praktikablen Zeitraumes durch Verschmutzung nicht gestört, weil sowohl die Lichtquelle als auch der Sensor hermetisch verschlossen sein können und für den Lichtdurchtritt nur Fenster angeordnet sind, vor denen luftdurchströmende Pufferzonen sich befinden.

Bei der Anwendung der Vorrichtung bei extrem ungünstigen atmosphärischen Bedingungen für Einbau, Betrieb und Wartung für eine Kalanderwalzensicherung über einem Schlichtebad wird in vorteilhafter Weise ein geschlossenes, abgedichtetes Gehäuse mit Luftaustrittsöffnungen aus den Pufferzonen vor den Fenstern der Lichtquelle und der Lichtempfangseinrichtung verwendet. Bei Betrieb besteht im Gehäuse ein geringer Luftüberdruck, Rückschlagventile verhindern Dampf-, Gas- oder Flüssigkeitseintritt. Die Vorrichtung ist dergestalt angeordnet, daß die Oberfläche der Walze in den Lichtweg des Lichtstrahls zwischen den Gehäusen ragt, so daß der Taststrahl achsparallel der Walze die Oberfläche derselben längs einer Mantellinie bestreicht oder diesbezüglich seines Querschnitts etwas angeschnitten wird. Die erkennungskritische Überhöhung einer exakten ungestörten Zylindermantellinie bei ca. 2000 mm Länge kann in vorteilhafter Weise weniger als 0,3 mm betragen.

Es ist vorteilhaft, die Tastgabel beidseitig an Gummipuffern aufzuhängen, um eine quasi kräftefreie Befestigung der Tastgabel gegenüber der Walze zu erzielen.

Kurzbeschreibung der Zeichnung:

Figur 1 eine schematische Darstellung eines Quetschwalzensatzes mit an der Unterwalze angeordneter Vorrichtung

Figur 2 eine um 90 Grad gedrehte Draufsicht auf Figur 1 unter Weglassung der Oberwalze zur Darstellung der räumlichen Anordnung der Tastgabel, die im Längsschnitt gezeichnet ist

Figur 3 die Darstellung der Tastgabel der Figur 2 im Detail, die ebenfalls im Längsschnitt dargestellt ist

Figur 4 eine Draufsicht auf den Sensor der Figur 3 in Richtung der einfallenden Lichtstrahlen, der bei gleicher Figur sowohl ein CCD-Matrix-Sensor als auch eine Zwei-Quadrantendiode sein kann

Figur 5 eine Darstellung der Halterung der Lichtquelle einschließlich der Druckluftzuführung und

Figur 6 eine Draufsicht auf die Leiterplatte in Figur 5.

Wege zur Ausführung der Erfindung:

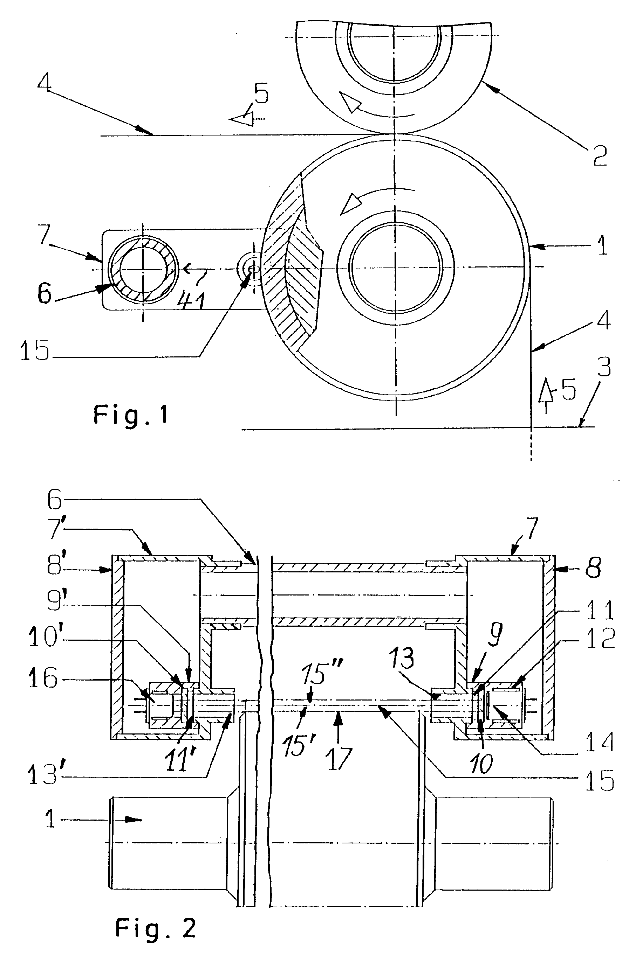

Gemäß den Figuren 1 und 2 ist ein Beispiel einer Vorrichtung anhand der Verwendung als Überwachungseinrichtung bei einem Quetschenwalzenpaar für ein Schlichtebad erklärt, bestehend aus einer Quetschwalze 1 mit einem gummielastischen Belag auf der Oberfläche und einer Oberwalze 2. Die Quetschwalze 1 ist dicht über dem Pegel 3 eines Schlichtebades angeordnet und zieht aus dem Bad eine Vielzahl von Fäden in Form einer Fadenlage 4 in Laufrichtung 5.

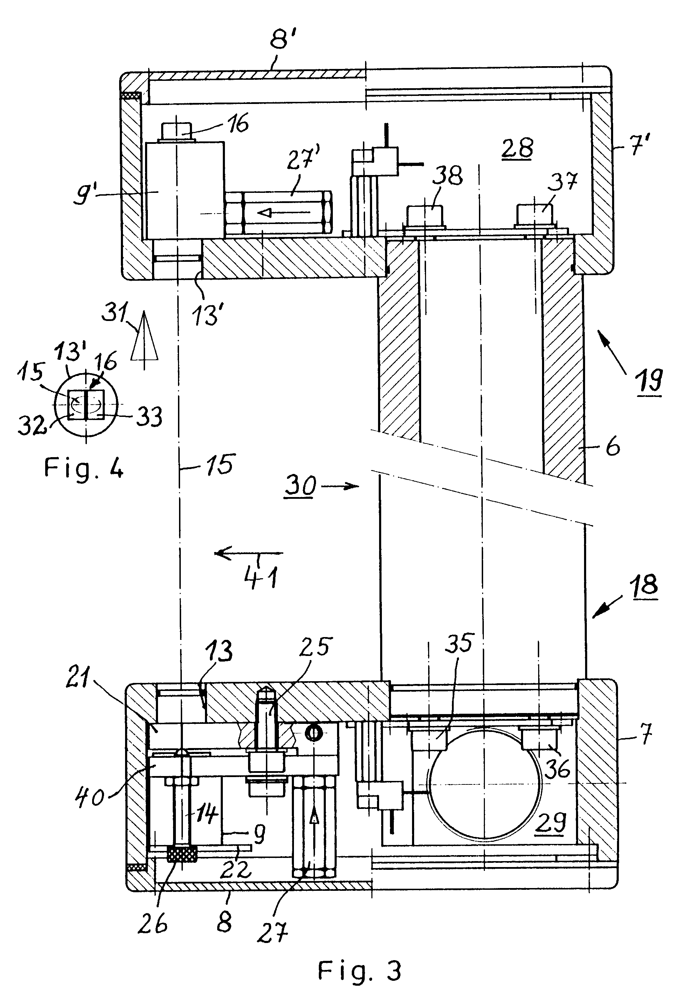

In Figur 3 ist die Überwachungseinrichtung detailliert dargestellt und besteht aus einer Tastgabel 30, die durch ein Stativrohr 6 und daran endständig befestigten armartigen Gehäusen 7,7′ gebildet ist, die parallel zueinander und senkrecht zum Stativrohr 6 gerichtet und mittels Deckel 8,8′ verschlossen sind. Die Gehäuse 7,7′ sind mittels Befestigungsschrauben 35,36,37,38 an das Stativrohr 6 geschraubt. Innerhalb des Sendergehäuses 7 sitzt ein Fassungsgehäuse 9, in welchem eine Lichtquelle 14 angeordnet ist, die vorzugsweise ein IR-Laser ist; gleichermaßen sitzt im Empfängergehäuse 7′ ein Fassungsgehäuse 9′, in welchem ein Sensor 16 als Lichtempfangs- und Auswerteeinrichtung angeordnet ist. IR-Laser 14 und Sensor 16 sind so aufeinander gerichtet, daß dieselbe den vom IR-Laser 14 herrührenden Lichtstrahl 15 empfangen kann.

Die Tastgabel 30, die aus einer Senderseite 18 und einer Empfängerseite 19 besteht, ist am Gerüst des Walzenpaares 1,2 oder eigenständig dergestalt befestigt, daß die armartigen Gehäuse 7,7′ die Quetschwalze 1 beidseitig etwas umfassen, so daß der Lichtstrahl 15 achsparallel zur Achse der Quetschwalze 1 längs einer Mantellinie 17 verläuft, wobei der Querschnitt des Lichtstrahls 15 vom Querschnitt der Quetschwalze 1 etwas angeschnitten werden kann.

Der Sensor 16 ist gemäß der Figur 4 zweigeteilt, dessen einer Bereich 33 der Oberfläche des Objektes in Richtung der Flächennormalen 41 näher und dessen anderer Bereich 32 der Oberfläche des Objektes in Richtung der Normalen 41 entfernter angeordnet ist, wobei der oberflächennähere Bereich als Tastbereich 33 und der oberflächenfernere Bereich als Referenzbereich 32 des Sensors 16 dienen und beide Bereiche 32,33 die jeweils auf ihn entfallenden Lichtintensitäten des Lichtstrahls 15 messen.

Bevorzugt ist der Sensor gemäß Figur 4 ein CCD-Matrix-Sensor 16 (CCD= Charged-Coupled-Device), dessen optisch aktive Fläche in einen Tastbereich 33 und einen Referenzbereich 32 unterteilt sind, wobei diese Unterteilung der Matrix bei oder nach der mechanischen Justage der Vorrichtung durch Definition der verschiedenen optisch aktiven Flächen zu Tastbereich 33 und zu Referenzbereich 32 des Sensors erfolgt, was vor-

4

zugsweise softwaremäßig geschieht. Die Verwendung eines CCD-Matrix-Sensors hat den entscheidenden Vorteil, daß die Vorrichtung leicht justiert werden kann, da erst nachträglich durch softwaremäßige beliebige Definition der sensiblen Sensorfläche die Verhältnisse von Tast-Ausgangssignal zu Referenz-Ausgangssignal festgelegt werden und vor allen Dingen leicht wieder geändert werden können.

Oder der Sensor gemäß Figur 4 ist eine Zwei-Quadrantendiode 16, wobei der dem Tastbereich zugeordnete Quadrant 33 der Oberfläche des Objektes in Richtung der Normalen 41 näher und der dem Referenzbereich zugeordnete Quadrant 32 der Oberfläche entfernter angeordnet sind.

Die Empfangssignale innerhalb des Sensors 16 werden in einer Auswerteeinrichtung ausgewertet; die Intensität des Lichtstrahls 15 wird vorzugsweise auf einen konstanten Wert nachgeregelt. Man kann somit den Lichtstrahl 15 in den Figuren 2,3 und 4 auch als Aufteilung in einen Tast-Teilstrahl 15′ und einen Referenz-Teilstrahl 15″ derselben Lichtquelle 14 auffassen, wobei die Aufteilung erst durch den Sensor 16 vorgenommen wird.

Beim Aufbau einer sich ändernden Überhöhung auf der Objektebene, beispielsweise ein Fadenwulst auf dem Umfang der Quetschwalze 1, wird der als Tast-Teilstrahl 15′ dienende Teil des Lichtstrahls 15 zunehmend abgeschattet; zugleich wird der Lichtstrahl 15 von den temperatur- und dampfbedingten optischen Störungen moduliert. Die beiden Bereiche 32,33 des Sensors 16 liefern für beide Teilstrahlen 15′,15″ elektrische Ausgangssignale, mit denen einerseits das System permanent auf das erforderliche Intensitäts- und Empfindlichkeitsniveau eingestellt und andererseits durch logische Verknüpfung das prüfrelevante Ereignis einer sich ändernden Überhöhung erkannt werden.

Prüfneutrale Ereignisse, zum Beispiel eine Unrund der Walzenoberfläche, werden als Störmeldung zeitkritisch unterdrückt.

In technischer Ausführung ist das Fassungsgehäuse 9 für die Lichtquelle 14 auf einen Arm 40 montiert, dem parallel ein Justiersockel 21 gegenübersteht, die beide innerhalb des Sendergehäuses 7 angeordnet sind. Mittels einer Justierschraube 25 kann der Arm 40 relativ zum Justiersockel 21 bewegt werden, so daß der IR-Laser 14 justiert werden kann, der dazu eine Justierschraube 26 aufweist.

Aufgrund der extremen Umgebungsbedingungen innerhalb des Schlichtebades können die Empfänger-Diode 16 und der IR-Laser 14 hermetisch innerhalb der Fassungsgehäuse 9,9′ verschlossen sein, die zum Lichtdurchtritt-Fenster 10,10′ aufweisen. Vor den Fenstern 10,10′ sind des weiteren Ringdüsen 11,11′ zum Luftdurchtritt angeordnet, wobei Druckluft über eine Luftzuführung innerhalb des Fassungsgehäuses 9′ des Sensors 16 bzw. über eine Luftzuführung 23 innerhalb des Justiersockels 21 zugeführt wird. Die Ringdüsen 11,11′ münden in zylinderförmige Fangräume 13,13′, die in Längsrichtung zentrisch von den Fenstern 10,10′ angeordnet sind. Die Druckluft dient zur Freispülung der Fenster 10, 10′ von lichtabsorbierenden oder -streuenden Bestandteilen innerhalb der Atmosphäre des Abtastraumes, wie Dampf- oder Schlichtetröpfchen. Vorzugsweise herrscht innerhalb der Tastgabel 30 ein Überdruck, um ein Eindringen von Umgebungsluft aus dem Abtastraum in die Volumina 28,29 der Tastgabel 30 zu verhindern, weshalb die Luftzuführungen mit je einem Rückschlagventil 27,27′ versehen sind. Der Fangraum 13 kann durch einen rohrförmigen, zylinderförmigen Zentriereinsatz 24 gebildet sein, der das Fensterglas des Austrittsfensters 10 fasst und der gleichzeitig die Luftzuführung über Ringnuten und Bohrungen aufweist.

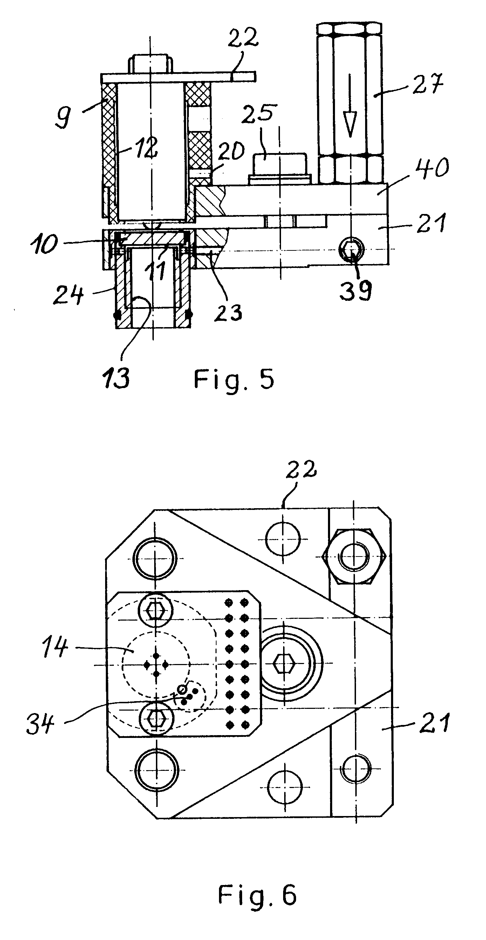

Figur 5 zeigt eine detaillierte Darstellung der Halterung des Fassungsgehäuses für die Lichtquelle, die in Figur 5 nicht dargestellt ist. Das Fassungsgehäuse 9 ist auf den Justiersockel 21 geeignet befestigt, wobei dieser einen parallelen Arm 40 aufweist, in dem eine Justierschraube 25 auf Zug eingesetzt ist, mittels derselben der Abstand zwischen dem Arm 40 und dem Justiersockel 21 variiert werden kann. Das Fassungsgehäuse 9 trägt eine Leiterplatte 22, auf der elektrische Aggregate zur Versorgung der Lichtquelle angeordnet sind. Das Fassungsgehäuse 9 weist innen einen ringförmigen Kühlspalt 12 auf, der über einen Luftzuführungskanal 20 mit Kühlluft zur Kühlung der Lichtquelle versorgt werden kann.

Vor der Lichtquelle bzw. vor dem Fassungsgehäuse 9 und integriert in den Justiersockel 21 ist ein zylinderförmiger Zentriereinsatz 24 angeordnet, der an seinem, dem Fassungsgehäuse 9 zugewandten Ende, das kreisförmige Austrittsfenster 10 trägt, wobei das Austrittsfenster 10 mitsamt dem Zentriereinsatz 24 gegenüber dem Fassungsgehäuse 9 abgedichtet sind. Innerhalb dieses Zentriereinsatzes 24 ist der zylinderförmige Fangraum 13 angeordnet, dessen Achse in Richtung des Lichtstrahls 15 verläuft. Innerhalb des Justiersockels 21 verläuft ein Luftzuführungskanal 23, der in die Ringdüse 11 vor dem Austrittsfenster 10 mündet. Mittels der Bezugsziffer 39 ist ein Abschluß für die Luftzuführung des Luftzuführungskanals 23 benannt.

Figur 6 zeigt in Draufsicht die Leiterplatte 22, die auf dem Ende des Fassungsgehäuses 9 montiert ist. Die Leiterplatte 22 trägt unter anderem einen Temperatursensor 34, mit dem das Temperaturverhalten der Vorrichtung erfaßt wird, um auch den Termperaturgang zu berücksichtigen.

Der Lichtstrahl kann auch mittels Strahlaufteilung durch einen teildurchlässigen Spiegel und eine Umlenkoptik in zwei eng benachbarte, achsparallele Teilstrahlen aufgeteilt werden, die dem Tast- und dem Referenzbereich des Sensors zugeordnet und getrennt aufgegeben werden. Die Strahlaufteilung kann unmittelbar nach der Lichtquelle oder unmittelbar vor dem Sensor erfolgen.

Gewerbliche Anwendbarkeit:

Die Erfindung ist zur Überwachung von kalandrierenden Walzen oder Walzengerüsten einsetzbar, bei denen die Dicke einer durch die Walzen geförderten Materialbahn überwacht werden soll. Diese Materialbahnen können die Fadenlage von Fäden oder Stoffbahnen, Papierbahnen oder sonstige Bahnen sein. Die kalandrierenden Walzen oder Walzengerüste können solche in Schlichtebädern oder Farbbädern mit erschwerten atmosphärischen Bedingungen oder in sonstigen Behandlungsstrecken angeordnet sein.

Liste der Bezugszeichen:

| | |
|---|---|
| 1 | Quetschwalze mit gummielastischem Belag |
| 2 | Oberwalze |
| 3 | Pegel des Schlichtebades |
| 4 | Fadenlage |
| 5 | Laufrichtung der Fadenlage |
| 6 | Stativrohr |
| 7,7′ | Sender- und Empfängergehäuse |
| 8,8′ | Deckel der Gehäuse 7,7′ |
| 9 | Fassungsgehäuse für Lichtquelle mit Kühlspalt 12 |
| 9′ | Fassungsehäuse für Empfänger-Diode 16 und Fenster 10′ |
| 10,10′ | kreisförmiges Eintrittsfenster |
| 11,11′ | Ringdüsen vor den Fenstern 10,10′ |
| 12 | ringförmiger Kühlspalt |
| 13,13′ | zylinderförmige Fangräume |
| 14 | Lichtquelle (IR-Laser) |
| 15 | Lichtstrahl |
| 15′ | Tast-Teilstrahl |
| 15″ | Referenz-Teilstrahl |
| 16 | Sensor (z.B. CCD-Matrix-Sensor oder 2-Quadrantendiode) |
| 17 | Mantellinie der Quetschwalze |
| 18 | Senderseite |
| 19 | Empfängerseite |
| 20 | Luftzuführungskanal |
| 21 | Justiersockel |
| 22 | Leiterplatte |
| 23 | Luftzuführungskanal |
| 24 | Zentriereinsatz mit Fensterfassung und Luftzuführung |
| 25 | Justierschraube (Zug) mit Feingewinde |
| 26 | Justierschraube |
| 27,27′ | Rückschlagventile |
| 28 | Volumen der Empfängerseite |
| 29 | Volumen der Senderseite |
| 30 | Tastgabel |
| 31 | Richtung des Sendelichtstrahls 15 |
| 32,33 | Quadranten der Empfänger-Diode 16 |
| 34 | Temperatursensor |
| 35,36, 37,38 | Befestigungsschrauben |
| 39 | Abschluß für Luftzuführung des Luftzuführungskanals 23 |
| 40 | Arm |
| 41 | Normale der Objektoberfläche |

## Patentansprüche

1. Vorrichtung zum Überwachen der Dicke einer durch kalandrierende Walzen oder Walzengerüste in Schlicht- oder Farbanlagen oder derartigen Behandlungsstrecken geförderten Materialbahn und Erkennen sich ändernder Überhöhungen auf derselben, insbesondere parallele Fadenscharen, unter erschwerten atmosphärischen Bedingungen,

gekennzeichnet durch ein Stativrohr (6), an dessen Enden armartig zwei Gehäuse (7, 7′) angeordnet sind zur Aufnahme einer Lichtquelle (14) und eines in einen Tast- und einen Referenzbereich (32, 33) zweigeteilten, opto-elektrischen Sensors (16) als Lichtempfangs- und Auswerteeinrichtung, wobei die Lichtquelle (14), die parallel zur überwachten Oberfläche der Walze (1) Licht (15) aussendet, welches die Oberfläche wenigstens tangiert oder von derselben im Querschnitt etwas abgeschattet wird und welches auf den Sensor (16) fällt, ein elliptisches oder kreisförmiges Lichtstrahlenbündel (15, 15′, 15″) erzeugt, in dessen Weg zwischen den Gehäusen (7, 7′) die Oberfläche der Walze (1) dergestalt ragt, daß der oberflächennähere Teil (15′) des Lichtstrahlenbündels (15, 15′, 15″) achsparallel der Walze (1) die Oberfläche derselben längst einer Mantellinie (17) bestreicht und der oberflächenfernere Teil (15″) des Lichtstrahlenbündels (15, 15′, 15″), der die Walzenoberfläche nicht berührt, dazu dient, die Intensität der Lichtquelle (14) auf einen konstanten Wert zu regeln zum Ausgleich optischer Veränderungen innerhalb des Abtastraumes.

2. Vorrichtung nach Anspruch 1, dadurch gekennzeichnet,
daß der Sensor (16) ein CCD-Matrix-Sensor (32,33) ist, dessen optische Aufteilung als aktive Fläche in den Tast- und den Referenzbereich (33,32) bei der Justage der Vorrichtung sofwaremäßig erfolgt.

3. Vorrichtung nach Anspruch 1, dadurch gekennzeichnet,
daß zur Aufteilung des Sensors (16) in den Tast- und den Referenzbereich (32,33) derselbe eine Zwei-Quadrantendiode ist, wobei die dem Tastbereich (33) zugeordnete Diode (33) der Oberfläche der Walze in Richtung der Normalen (41) näher und die dem Referenzbereich (32) zugeordnete Diode (32) der Oberfläche der Walze der Normalen (41) entfernter angeordnet sind.

4. Vorrichtung nach Anspruch 1, dadurch gekennzeichnet,
daß der Lichtstrahl mittels einer unmittelbar nach der Lichtquelle oder unmittelbar vor dem Sensor befindlichen Strahlenaufteilung durch einen teildurchlässigen Spiegel und eine Umlenkoptik in zwei eng benachbarte, achsparallele Teilstrahlen aufgeteilt wird, die dem Tast- und dem Referenzbereich des Sensors (16) zugeordnet und getrennt aufgegeben werden.

5. Vorrichtung nach Anspruch 1, dadurch gekennzeichnet,
daß entweder direkt nach der Lichtquelle und/oder vor dem Sensor Druckluftschleusen mit Druckluftfördereinrichtungen (23) angeordnet sind zum Freiräumen der Lichtquelle (14) und des Sensors (16) und/oder der Oberfläche der Walze von die Atmosphäre verunreinigenden Bestandteilen.

6. Vorrichtung nach Anspruch 1, dadurch gekennzeichnet,
daß die Lichtquelle (14) und/oder der Sensor (16) innerhalb der Gehäuse (7,7′) hermetisch verschlossen und für den Lichtdurchtritt je ein Fenster (10,10′) vorhanden sind und die Druckluftschleusen aus vor den Fenstern (10,10′) angeordnete Ringdüsen (11,11′) bestehen, und nach den Druckluftschleusen (11,11′) zentrisch zum Lichtstrahl (15) Fangräume (13,13′) angeordnet sind, die von Druckluft in Richtung bzw. in Gegenrichtung des Lichtstrahls (15) durchströmt sind.

7. Vorrichtung nach Anspruch 6, dadurch gekennzeichnet,
daß längs des Stativrohres eine Leiste mit druckluftbeaufschlagten Luftaustrittsdüsen angeordnet ist, die der vom Lichtstrahl bestrichenen Mantellinie der Walze benachbart sind, wobei der Luftstrom senkrecht zum Lichtstrahl (15) und der Oberfläche der Walze (17) gerichtet ist.

8. Vorrichtung nach Anspruch 1, dadurch gekennzeichnet,
daß mindestens eines der Gehäuse (7,7′) und/oder die Lichtquelle (14) und/oder der Sensor (16) eine mechanische Justiereinrichtung (25) aufweisen.

## Claims

1. Device to monitor the thickness of a web of material conveyed by means of calendering rollers or roller frames in sizing or dyeing installations or in similar treatment segments, as well as to detect height changes on said web, especially bulges of parallel threads, under adverse atmospheric conditions,
characterized by a stand pipe (6) at whose ends there are two arm-like housings (7, 7′) to hold a source of light (14) as well as an optoelectrical sensor (16) divided in a scanning section and a reference section (32, 33) as the light receiving and evaluation unit, whereby the source of light (14) which, parallel to the monitored surface of the roller (1), emits light which at least grazes the surface or wich is slightly shaded in its cross section by the surface, and which falls onto the sensor (16), generates an elliptical or circular light beam pencil (15, 15′, 15″) in whose path between the housings (7, 7′), the surface of the roller (1) protrudes in such a manner that the part (15′) of the light beam pencil (15, 15′, 15″) which is closer to the surface grazes the surface of the roller (1) axis-parallel to the roller, along a generating line (17), while the part (15″) of the light beam pencil (15, 15′, 15″) which is further from the surface and which does not touch the roller surface serves to regulate the intensity of the source of light (14) to a constant value in order to compensate for optical changes within the scanning area.

2. Device according to Claim 1, characterized in that
the sensor (16) is a CCD matrix sensor (32, 33) whose active surface is optically divided into the scanning section and the reference section (33, 32) by means of the software when the device is adjusted.

3. Device according to Claim 1, characterized in that,
in order to divide the sensor (16) into the scanning section and the reference section (32, 33), said sensor is a two-quadrant diode, whereby the diode (33) associated with the scanning section (33) is positioned closer to the surface of the roller in the direction of the normal line (41), while the diode (32) associated with the reference section (32) is positioned further from the surface of the roller in the direction of the normal line (41).

4. Device according to Claim 1, characterized in that
the light beam is divided by a beam divider located immediately beyond the source of light or immediately before the sensor by means of a semi-reflecting mirror and of a deflection lens into two closely adjacent, axis-parallel partial beams, which are associated with the scanning section and the reference section of the sensor (16) and which are transmitted separately.

5. Device according to Claim 1, characterized in that,
either directly beyond the source of light and/or before the sensor, there are compressed-air locks equipped with compressed air conveying mechanisms (23) to free the source of light (14) and the sensor (16) and/or the surface of the roller from the substances which pollute the atmosphere.

6. Device according to Claim 1, characterized in that
the source of light (14) and/or the sensor (16) are hermetically sealed within the housings (7, 7′) and, to ensure the passage of light, there is a window (10, 10′) for each housing, and the compressed-air locks consist of ring nozzles (11, 11′) located in front of the windows (10, 10′) and, centered with respect to the light beam (15), there are trap spaces (13, 13′) beyond the compressed-air locks (11, 11′), whereby compressed air flows through said trap spaces in the same direction or else opposite to the direction of the light beam (15).

7. Device according to Claim 6, characterized in that,
along the stand pipe, there is a bar with air outlet nozzles which are supplied with compressed air, and which are adjacent to the generating line of the roller grazed by the light beam, whereby the air flow is aimed perpendicularly to the light beam (15) and to the surface of the roller (17).

8. Device according to Claim 1, characterized in that
at least one of the housings (7, 7′) and/or the source of light (14) and/or the sensor (16) has a mechanical adjustment mechanism (25).

**Revendications**

1. Dispositif pour surveiller l'épaisseur d'une bande de matière transportée par des cylindres calandrants ou par des cages à cylindres à travers des installations d'encollage ou de teinture ou sur d'autres parcours de traitement et pour détecter les surélévations changeantes sur celle-ci, en particulier des bourrelets de fils parallèles, dans des conditions atmosphériques difficiles,
caractérisé par le fait qu'il comporte un statif tubulaire (6) aux extrémités duquel sont disposés deux boîtiers (7, 7′) ressemblant à des bras et destinés à recevoir une source lumineuse (14) et un détecteur optoélectrique (16) subdivisé en une partie balayage et une partie référence (32, 33) servant de dispositif de réception de la lumière et d'analyse, la source lumineuse (14) qui, parallèlement à la surface surveillée du cylindre (1), émet de la lumière qui touche au moins tangentiellement la surface ou qui est ombrée un peu par cette dernière dans sa section transversale et arrive sur le détecteur (16), engendrant un faisceau de rayons lumineux (15, 15′, 15″) elliptique ou circulaire, dans le trajet duquel, entre les boîtiers (7, 7′), la surface du cylindre (1) s'avance de sorte que la partie plus proche de la surface (15′) du faisceau de rayons lumineux (15, 15′, 15″) parallèle à l'axe du cylindre (1) balaye la surface de celui-ci le long d'une génératrice (17), et que la partie plus éloignée de la surface (15″) du faisceau de rayons lumineux (15, 15′, 15″), laquelle ne touche pas la surface du cylindre, serve à régler l'intensité de la source lumineuse (14) à une valeur constante afin de compenser les variations optiques dans la zone de balayage.

2. Dispositif suivant la revendication 1, caractérisé par le fait que
le détecteur (16) est un détecteur matriciel CCD (32, 33) dont la subdivison de sa surface optiquement active en zone de balayage et zone de référence (33, 32) s'effectue par logiciel lors de l'ajustage du dispositif.

3. Dispositif suivant la revendication 1, caractérisé par le fait que,

aux fins de la subdivision du détecteur (16) en zone de balayage et zone de référence (32, 33), celui-ci est une diode à deux quadrants, la diode (33) correspondant à la zone de balayage (33) étant disposée plus à proximité de la surface du cylindre en direction de la normale (41) et la diode (32) correspondant à la zone de référence (32) étant disposée plus loin de la surface du cylindre en direction de la normale (41).

4. Dispositif suivant la revendication 1, caractérisé par le fait qu'
un diviseur de rayonnement disposé immédiatement après la source lumineuse ou immédiatement avant le détecteur divise le faisceau lumineux, à l'aide d'un miroir semi-transparent et d'une optique de déviation, en deux faisceaux partiels étroitement adjacents à axes parallèles qui correspondent respectivement à la zone de balayage et de référence du détecteur (16) et sont transmis séparément.

5. Dispositif suivant la revendication 1, caractérisé par le fait que
des écluses à air comprimé dotées de dispositifs transporteurs pneumatiques (23) sont disposées directement après la source lumineuse et/ou avant le détecteur servant à débarrasser la source lumineuse (14) et le détecteur (16) et/ou la surface du cylindre des impuretés polluant l'atmosphère.

6. Dispositif suivant la revendication 1, caractérisé par le fait que
la source lumineuse (14) et/ou le détecteur (16) sont hermétiquement enfermés dans les boîtiers (7, 7'), que la lumière passe respectivement à travers une fenêtre (10, 10') et que les écluses à air comprimé sont constituées par des buses annulaires (11, 11') disposées devant les fenêtres (10, 10') et que des chambres de collection (13, 13') sont disposées centralement par rapport au faisceau lumineux (15) derrière les écluses à air comprimé (11,11') à travers lesquelles passe de l'air comprimé dans le sens du faisceau lumineux (15) ou en sens inverse.

7. Dispositif suivant la revendication 6, caractérisé par le fait qu'
une barre munie de buses de sortie d'air alimentées en air comprimé est disposée le long du statif tubulaire, lesdites buses étant contiguës à la génératrice du cylindre touchée par le faisceau lumineux, et que le courant d'air est dirigé perpendiculairement au faisceau lumineux (15) et à la surface du cylindre (17).

8. Dispositif suivant la revendication 1, caractérisé par le fait qu'
au moins l'un des boîtiers (7, 7') et/ou la source lumineuse (14) et/ou le détecteur (16) sont dotés un dispositif d'ajustage mécanique.

Fig. 1

Fig. 2

Fig. 4

Fig. 3

Fig. 5

Fig. 6